# EUROPEAN PATENT APPLICATION

(11) **EP 2 387 186 A1**
(43) Date of publication of application: **16.11.2011**
(21) Application number: 10729242.7
(22) Date of filing: 08.01.2010
(51) Int. Cl.: H04L 12/66, H04L 29/06, H04M 3/00, H04W 4/18, H04W 92/06

(54) **GATEWAY DEVICE AND METHOD, AND PROGRAM**

(30) Priority: 09.01.2009 JP 2009004048
(71) Applicant: NEC Corporation, Minato-ku Tokyo 108-8001 (JP)
(72) Inventor: OZAWA, Kazunori, Tokyo 108-8001 (JP)
(74) Representative: Betten & Resch
(86) International application number: PCT/JP2010/050145
(87) International publication number: WO 2010/079822

(57) **Abstract**

A gateway apparatus, a gateway method, and a program that allow interconnection between a terminal connected to a mobile circuit switched network and a terminal connected to a mobile high-speed network and can implement voice telephony between any combination of terminals. A gateway apparatus (110) performs voice communication mutually between a mobile high-speed network (140) and a mobile circuit switched network (130) via an IMS network (350). The gateway apparatus receives a packet from the mobile high-speed network (140) or from the IMS network (350), performs protocol conversion of the packet, in case the gateway apparatus decides that the protocol conversion of the packet is necessary, converts an audio compression-encoding scheme, in case the gateway apparatus decides that the conversion of the audio compression-encoding scheme is necessary, and outputs a resulting packet to the IMS network or the mobile circuit switched network. The gateway apparatus receives a circuit switching protocol from the mobile circuit switched network or a packet from the IMS network to perform protocol conversion, converts an audio compression-encoding scheme, in case the gateway apparatus decides that the conversion of the audio compression-encoding scheme is necessary, converts a resulting signal into a packet, and outputs the packet converted to the IMS network or the mobile high-speed network.

## Description

### TECHNICAL FIELD

The present invention is based upon and claims the benefit of the priority of Japanese Patent Application No. 2009-004048 (filed on January 9, 2009), the disclosure of which is incorporated herein in its entirety by reference.
The present invention relates to a gateway. More specifically, the invention relates to a gateway apparatus, a gateway method, and, a program for mutually connecting VoIP voice communication in a mobile high-speed network or an IMS (IP Multimedia Subsystem) network and voice communication in a mobile circuit switched network. The gateway apparatus is arranged between the mobile high-speed network or the IMS network and the mobile circuit switched network.

### BACKGROUND ART

Currently, in a cellular phone terminal and a mobile network employing the third-generation W-CDMA (Wideband Code Division Multiple Access) technology or the CDMA (Code Division Multiple Access) technology, voice telephony services are implemented, using the mobile circuit switched network and a protocol for circuit switching.

On the other hand, due to research and development of a mobile network technology for higher speed and larger capacity, it is expected that the mobile network will achieve further higher speed and further larger capacity on the basis of an IP. Currently, HSDPA (High Speed Downlink Packet Access), HSPA (High Speed Packet Access), EVDO Rev. A, EVDO Rev. B, and so forth are made practical.

There is a trend that LTE (Long Term Evolution), EPC (Evolved Packet Core), UMA (Ultra Mobile Access), mobile WiMax, and so forth, which allow high-speed transfer and aim at a downlink transmission rate of 100 Mbps (Mega bits/sec) or more and an uplink transmission rate of 50 Mbps or more, will be introduced from now on.

In these transmission schemes, a voice telephony is expected to evolve into that using IP-based VoIP (Voice over IP).

Patent Document 1 discloses a different-type network connection gateway that connects a first network and a second network which uses a signal format different from that of the first network. The gateway includes a conversion unit that converts a signal used in the first network into a signal used in the second network and converts a signal used in the second network into a signal used in the first network, when a terminal connected to the first network and another terminal connected to the second network communicate; a detection unit that detects conversion processing information including at least one of a conversion period of time taken for the signal conversion by the conversion unit and an amount of data converted by the conversion unit; and a network connection unit that is connected to at least one of the first network and the second network and transmits conversion processing information to a charging system of the first network or the second network. The conversion unit converts at least one of a call processing signal by call connection signaling, a voice signal by an audio codec, and an image signal by an image codec.

Patent Document 2 discloses an interworking apparatus as a configuration that allows a 30 (third generation) CS (circuit switched) terminal to be directly accommodated in an IMS network and that implements bearer protocol conversion without affecting existing systems. The interworking apparatus includes an IuCS interface unit that receives an IuUP (Iu User Plane) protocol signal; a protocol conversion unit that converts the IuUP protocol signal into an RFC3267 protocol signal; and an Mb interface unit that receives the RFC3267 protocol signal. The interworking apparatus includes an Mb interface unit that receives an RFC3267 protocol signal, a protocol conversion unit that converts the RFC3267 protocol signal to an IuUP protocol signal, and the IUCS interface unit that transmits the IuUP protocol signal.

Patent Document 1: JP Patent Kokai Publication No. JP-P-2004-222009A
Patent Document 2: JP Patent Kokai Publication No. JP-P-2008-205698A

### SUMMARY OF THE INVENTION

### PROBLEMS TO BE SOLVED BY THE INVENTION

Analyses of the related arts by the present invention will be given below.

In a transient period in which voice telephony evolves into IP-based VoIP, a VoIP terminal that operates on LTE or EPC which will become prevalent in the coming years and a terminal that operates on an existing circuit switched network are both present. Thus, it is necessary to inter-connect voice telephony on an existing circuit switched network and VoIP on a mobile high-speed network such as LTE or EPC.

However, no gateway apparatus for allowing interconnection of voice telephony and Vo-IP is present. The interconnection is therefore difficult to achieve.

An object of the present invention is to provide a gateway apparatus, a gateway method, and a program that allow interconnection between a terminal connected to a mobile circuit switched network and a terminal connected to a mobile high-speed network and can implement a voice telephony between any combination of terminals.

### MEANS TO SOLVE THE PROBLEM

According to the present invention, there is provided a gateway apparatus that performs voice communication mutually between a mobile high-speed network and a mobile circuit switched network via an IMS network, wherein the gateway apparatus receives a packet from the mobile high-speed network or from the IMS network, performs protocol conversion of the packet, in case the gateway apparatus decides that the protocol conversion of the packet is necessary, converts an audio compression-encoding scheme, in case the gateway apparatus decides that the conversion of the audio compression-encoding scheme is necessary, and outputs the converted packet to the IMS network or to the mobile circuit switched network, and wherein the gateway apparatus receives a circuit switching protocol from the mobile circuit switched network or a packet from the IMS network to perform protocol conversion, converts an audio compression-encoding scheme, in case the gateway apparatus decides that the conversion of the audio compression-encoding scheme is necessary, converts resulting information into a packet, and outputs the packet converted to the IMS network or to the mobile high-speed network.

According to the present invention, there is provided a method for a gateway to perform voice communication mutually between a mobile high-speed network and a mobile circuit switched network via an IMS network, wherein the gateway method comprises:
receiving a packet from the mobile high-speed network or from the IMS network;
performing protocol conversion of the packet, in case the gateway decides that the protocol conversion of the packet is necessary;
converting an audio compression-encoding scheme, in case the gateway decides that the conversion of the audio compression-encoding scheme is necessary; and
outputting a resulting packet to the IMS network or to the mobile circuit switched network, and wherein the method further comprises:
   receiving a circuit switching protocol from the mobile circuit switched network or a packet from the IMS network to perform protocol conversion;
   converting an audio compression-encoding scheme, in case the gateway decides that the conversion of the audio compression-encoding scheme is necessary; and
   converting resulting information into a packet; and
   outputting the packet converted to the IMS network or to the mobile high-speed network.

According to the present invention, there is provided a program for a computer constituting a gateway apparatus that performs voice communication mutually between a mobile high-speed network and a mobile circuit switched network via an IMS network. The program causes the computer to execute processes including:
receiving a packet from the mobile high-speed network or from the IMS network, performing protocol conversion of the packet, in case the gateway apparatus decides that the protocol conversion of the packet is necessary, converting an audio compression-encoding scheme, in case the gateway apparatus decides that the conversion of the audio compression-encoding scheme is necessary, and outputting a resulting packet to the IMS network or to the mobile circuit switched network; and
receiving a circuit switching protocol from the mobile circuit switched network or a packet from the IMS network to perform protocol conversion, converting an audio compression-encoding scheme, in case the gateway apparatus decides that the conversion of the audio compression-encoding scheme is necessary, converting resulting information into a packet, and outputting the packet converted to the IMS network or the mobile high-speed network.

### EFFECT OF THE INVENTION

According to the present invention, interconnection between a terminal connected to the mobile circuit switched network and a terminal connected to the mobile high-speed network is allowed, and a voice telephony between any combination of terminals can be implemented.

### BRIEF DESCRIPTION OF THE DRAWINGS

Fig. 1 is a diagram showing a system configuration of a first exemplary embodiment of the present invention;
Fig. 2 is a diagram showing a configuration of a gateway apparatus in the first exemplary embodiment of the present invention;
Fig. 3 is a diagram showing a configuration of a gateway apparatus in a second exemplary embodiment of the present invention;
Fig. 4 is a diagram showing a system configuration of a third exemplary embodiment of the present invention;
Fig. 5 is a diagram showing a system configuration of a fourth exemplary embodiment of the present invention; and
Fig. 6 is a block diagram showing a configuration of a gateway apparatus in the fourth exemplary embodiment of the present invention.

### MODES FOR CARRYING OUT THE INVENTION

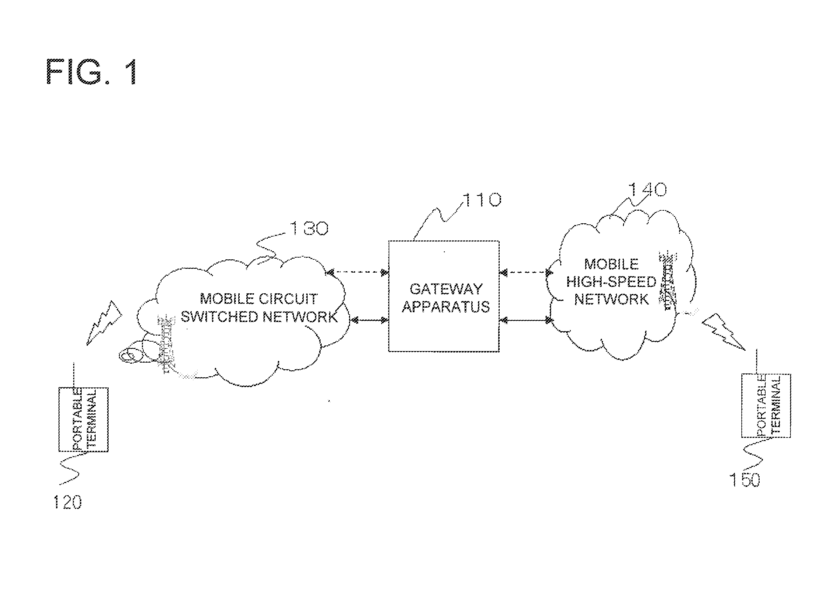

The following describes exemplary embodiments of the present invention will be described. Fig. 1 is a diagram showing a network configuration and a connection configuration of a gateway apparatus in a first exemplary embodiment of the present invention. Referring to Fig. 1, a portable terminal 120 is an existing voice phone terminal connected to a mobile circuit switched network. The portable terminal 120 is connected to a mobile circuit switched network 130, is equipped with an AMR (Adaptive Multi-Rate) audio codec, for example, and transmits and receives a bit stream obtained by compression-encoding a voice signal at a bit rate of 12.2 kbps. For details of the AMR audio codec, reference may be herein made to the 3GPP (Third generation Partner Project) TS26.090 standard or the like, for example.

In the mobile circuit switched network 130, a radio base station (Node B) or a radio network controller (RNC (Radio Network Controller)) transmits and receives the AMR stream in the form of being encapsulated in the IuUP (Iu User Plane) circuit switching protocol. The mobile circuit switched network 130 outputs a call processing signal used in the mobile circuit switched network as a call processing signal. For the IuUP protocol, reference may be herein made to the 3GPP TS25.415 standard or the like.

A portable terminal 150 indicates a VoIP voice terminal connected to an IP-based mobile high-speed network 140 (such as LTE, EPC, UMA, HSDPA, HSPA, or mobile WiMax).

The portable terminal 150 mounts an AMR audio codec, for example, and compression-encodes a voice signal at a bit rate of 12.2 kbps (kilobits/second), for example, to generate a bit stream. Further, the portable terminal 150 encapsulates the bit stream in the RTP (Real-time Transport Protocol) to generate an RTP packet. The portable terminal 150 then connects to the mobile high-speed network 140, and transmits and receives the RTP packet on the UDP (User Datagram Protocol)/IP (Internet Protocol). Herein, in case the AMR bit stream is packetized into the RTP packet, the RTP payload format is necessary. For this RTP payload format, reference may be made to the IETF (the Internet Engineering Task Force) RFC3267 standard, for example. For details of the function of the VoIP terminal mentioned above, reference may be made to the 3GPP TS26.114 standard can be referred to.

A gateway apparatus 110 connects to both of the mobile circuit switched network 130 and the mobile high-speed network 140, thereby mutually connecting voice communication between the mobile circuit switched network 130 and the mobile high-speed network 140. That is, interconnection is performed by converting both of a call control signal and the protocol on voice data. Specifically, as an example, in case the mobile high-speed network 140 is the EPC or the LTE, the gateway apparatus 110 exchanges the call control signal and a packet with a PGW or a PDN-GW (Packet Data Network Gateway). The gateway apparatus 110 exchanges the call control signal and a voice signal with an MSC (Mobile Switching Center) of the mobile circuit switched network 130. For details of the PDN-GW, reference may be herein made to the 3GPP TS23.401 standard, for example.

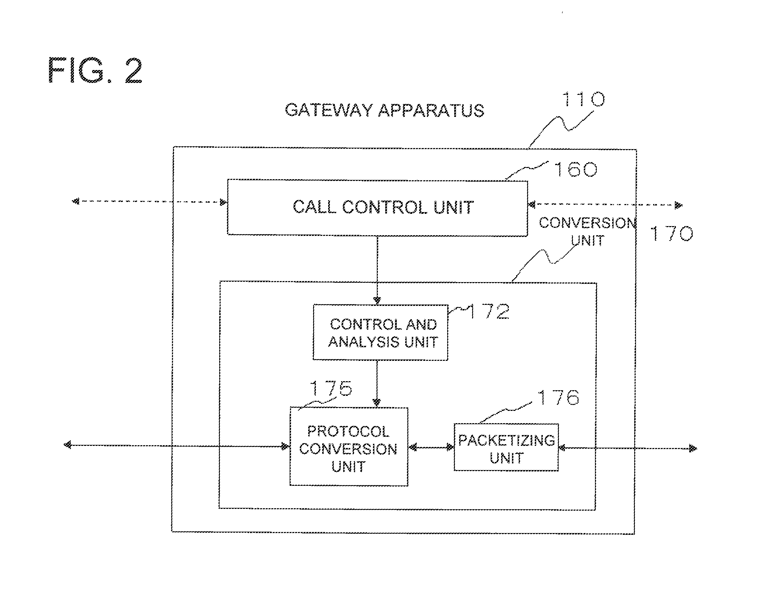

Fig. 2 is a diagram showing a configuration of the gateway apparatus 110 in this exemplary embodiment. Referring to Fig. 2, the gateway apparatus 110 includes a call control unit 160 and a conversion unit 170. The conversion unit 170 includes a control and analysis unit 172, a protocol conversion unit 175, and a packetizing unit 176.

First, interconnection between the mobile circuit switched network 130 and the mobile high-speed network 140 will be described. Referring to Fig. 2, the call control unit 160 receives the call control signal (constituted from a SIP (Session Initiation Protocol)) signal and a SDP (Session Description Protocol) signal) from the mobile high-speed network 140, converts the received call control signal to the call control signal for circuit switching, and outputs the call control signal for circuit switching to the mobile circuit switched network 130. The call control unit 160 also performs conversion in an opposite direction. The call control unit 160 converts a call control signal for circuit switching received from the mobile circuit switched network 130 to SIP and SDP signals, for example, and outputs the SIP and SDP signals to the mobile high-speed network 140. For the SIP and the SDP, reference may be made to the IETF RFC3261 and IETF RFC2327, respectively.

The call control unit 160 outputs necessary information in information included in the call control signal received from the mobile circuit switched network 130 and information included in the SIP signal or the SDP signal received from the mobile high-speed network 140 to the control and analysis unit 172 mounted on the conversion unit 170 for each channel (line).

The control and analysis unit 172 compares the information for each cannel, received from the call control unit 160, decides whether or not protocol conversion is necessary, and, for each channel, outputs to the protocol conversion unit 175 conversion information specifying what conversion is to be performed, in case the conversion is necessary.

The protocol conversion unit 175 receives an IuUP circuit switching protocol from the mobile circuit switched network 130, and reads the compression-encoded bit stream of a voice encapsulated in the protocol. It is herein assumed that the compression-encoding bit stream of the voice is a bit stream compression-encoded by AMR.

Further, the protocol conversion unit 175 receives the conversion information from the control and analysis unit 172, for each channel. In case the protocol conversion is necessary, the protocol conversion unit 175 constructs an RTP payload format header defined in the IETF RFC3267, and stores the bit stream compression-encoded by AMR in a payload portion, for each channel, according to the conversion information, for example.

Frame type information included in the bit stream of the voice compression-encoded by AMR represents a bit rate. Thus, the frame type information is hence transformed into codec mode request (CMR) information of the RFC3267.

Octet align or other necessary parameters of the RFC3267 are set to set values defined in advance.

The packetizing unit 176 receives RTP payload format information from the protocol conversion unit 175, stores the RTP payload format information in an RTP packet, and outputs the RTP/UDP/IP.

In the connection in an opposite direction (direction from the mobile high-speed network to the mobile circuit switched network), conversion is performed along a path opposite to that in the above description, and interconnection is performed between the mobile high-speed network 140 and the mobile circuit switched network 130.

A different known codec such as AMR-WB or G. 711 other than AMR may be employed as the audio codec used for generation of the compression-encoded bit stream of the voice.

Though the control and analysis unit 172 is arranged in the conversion unit 170, the control and analysis unit 172 may be arranged in the call control unit 160.

The call control unit 160 and the conversion unit 170 can be implemented, being individually separated at different apparatuses. In the case of such a configuration, a control signal may be exchanged between the call control unit 160 and the conversion unit 170 using ITU-T H. 248 MEGACO protocol, for example.

In the connection between the gateway apparatus 110 and the mobile circuit switched network 130, the gateway apparatus 110 may also be connected to a circuit switching side of an ICS (IMS Centralized Service) gateway apparatus for interconnecting the circuit switched network and an IMS (IP Multimedia core network Subsystem) network. Referring to Fig. 2, processing and functions of the call control unit 160 and the conversion unit 170 (formed of the control and analysis unit 172, the protocol conversion unit 175, and the packetizing unit 176) may also be implemented by a program executed by a computer constituting the gateway apparatus 110.

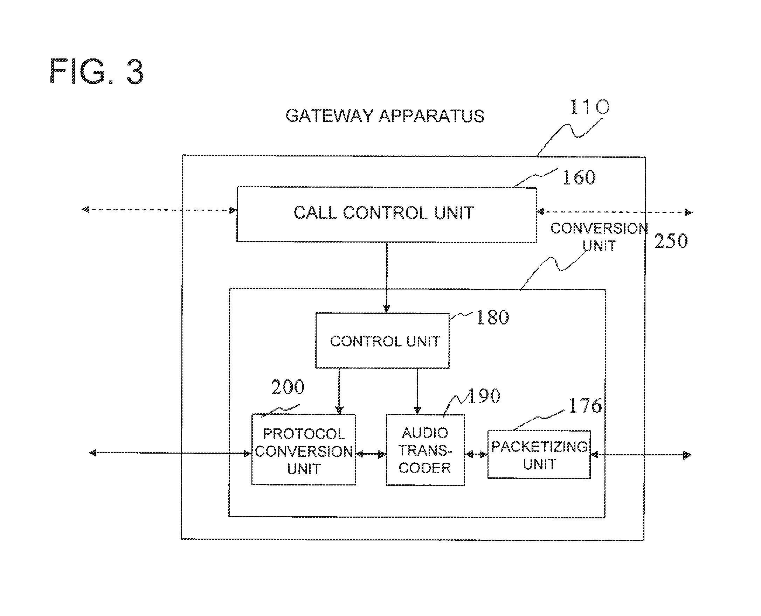

Next, a second exemplary embodiment of the present invention will be described. Fig. 3 is a diagram showing a configuration of the second exemplary embodiment of the present invention. Referring to Fig. 3, same reference numerals are assigned to elements that are the same as those in Fig. 2. The elements in Fig. 3 to which the same reference numerals in Fig. 2 are assigned perform the same operations as those in Fig. 2. Thus, description of the elements will be omitted.

Referring to Fig. 3, in addition to conversion of a protocol, an audio encoding scheme is also converted by the gateway apparatus 110 because audio codecs mounted on the portable terminal 120 and the portable terminal 150 are mutually different.

A control unit 180 analyzes information received from the call control unit 160, and issues a conversion instruction to both of a protocol conversion unit 200 and an audio transcoder 190 so that not only the protocol conversion but also the conversion of the audio encoding scheme is performed for each channel.

The audio transcoder 190 converts the audio encoding scheme, based on the conversion instruction from the control unit 180. It is herein assumed that an AMR codec is mounted on the portable terminal 120 on the side of the mobile circuit switched network 130, and a G. 711 codec is mounted on the portable terminal 150 on the side of the mobile high-speed network 140. In this case, the audio transcoder 190 converts the audio compression-encoding scheme between AMP and G. 711.

The protocol conversion unit 200 performs the protocol conversion, based on the conversion instruction from the control unit 180. To take an example, the protocol conversion unit 200 converts the protocol to the IuUP circuit switching protocol, for the mobile circuit switched network 130, and converts the protocol to the RTP protocol, for the mobile high-speed network 140. In the case of G.711, the RTP payload format is not necessary. A payload type number set in advance for identifying G. 711 is written into an RTP header portion.

A different known codec other than the AMR codec and the G. 711 codec mentioned above may be used as an audio codec used for generation of the compression-encoded bit stream of a voice in the second exemplary embodiment of the present invention.

Though the control unit 180 is arranged in a conversion unit 250, the control unit 180 may be arranged in the call control unit 160.

Further, the call control unit 160 and the conversion unit 250 can be arranged, being individually separated at different apparatuses. In the case of such a configuration, a control signal may be exchanged between the call control unit 160 and the conversion unit 250 using the ITU-T H. 248 MEGACO protocol, for example.

In connection between the gateway apparatus 110 and the mobile circuit switched network 130, the gateway apparatus 110 may also be connected to a circuit switching side of an ICS (IMS Centralized Service) gateway apparatus for mutually connecting the circuit switched network and an IMS (IP Multimedia core network Subsystem) network. Referring to Fig. 3, processing and functions of the call control unit 160 and the conversion unit 250 (formed of the control unit 180, the protocol conversion unit 200, the audio transcoder 190, and the packetizing unit 176) may also be implemented by a program executed by a computer constituting the gateway apparatus 110.

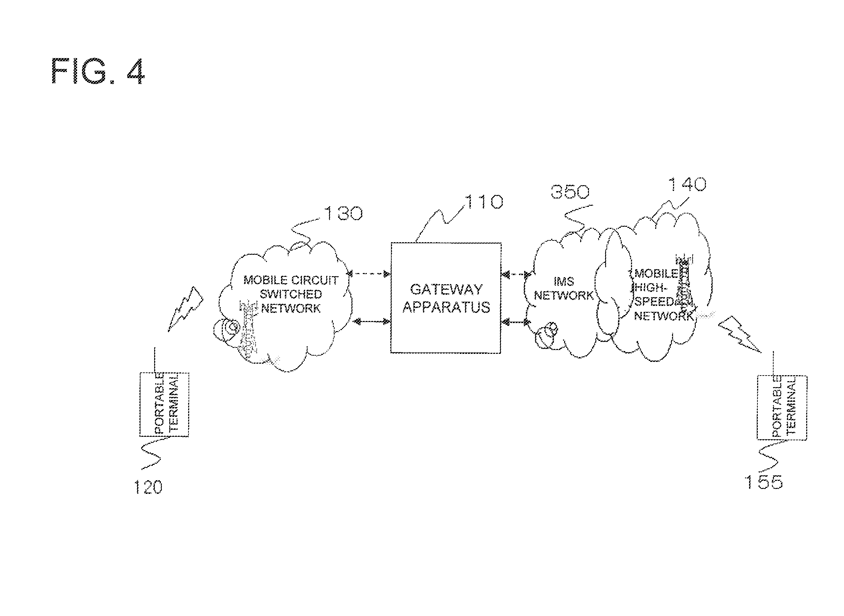

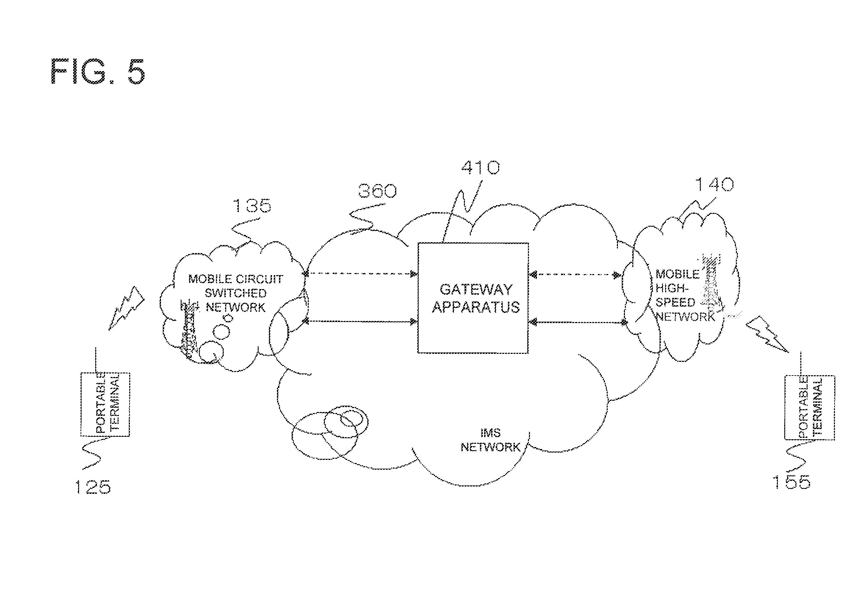

Next, a third exemplary embodiment of the present invention will be described. Fig. 4 is a diagram showing a system configuration of the third exemplary embodiment of the present invention. Referring to Fig. 4, same reference numerals are assigned to elements that are the same as those in Fig. 1. Descriptions of the elements in Fig. 5 that perform the same operations as those in Fig. 1 will be omitted.

Referring to Fig. 4, the mobile high-speed network 140 is mutually connected to an IMS (IP Multimedia Subsystem) network 350. A portable terminal 155 enjoys various IMS multimedia services as well as VoIP voice communication.

In the case of this configuration as well, the gateway apparatus 110 is connected to both of the mobile circuit switched network 130 and the IMS network 350, thereby mutually connecting the circuit switched network and the IMS network. The gateway apparatus 110 performs the same operations as the gateway apparatus shown in Fig. 2 or 3.

Next, a fourth exemplary embodiment of the present invention will be described. Fig. 5 is a diagram showing a configuration of the fourth exemplary embodiment of the present invention. Referring to Fig. 5, same reference numerals are assigned to elements that are the same as those in Fig. 4. Descriptions of the elements in Fig. 5 that perform the same operations as those in Fig. 4 will be omitted.

In the system in Fig. 5, each of the mobile high-speed network 140 and a mobile circuit switched network 135 is connected to an IMS network 360. An ICS (IMS Centralized Service) gateway apparatus (not shown) is arranged in the mobile circuit switched network 135 and is connected to the FMS network 360.

A portable terminal 125 is adapted to allow enjoying not only voice communication performed by circuit switching but also various IMS services. A gateway apparatus 410 is arranged in the IMS network 360.

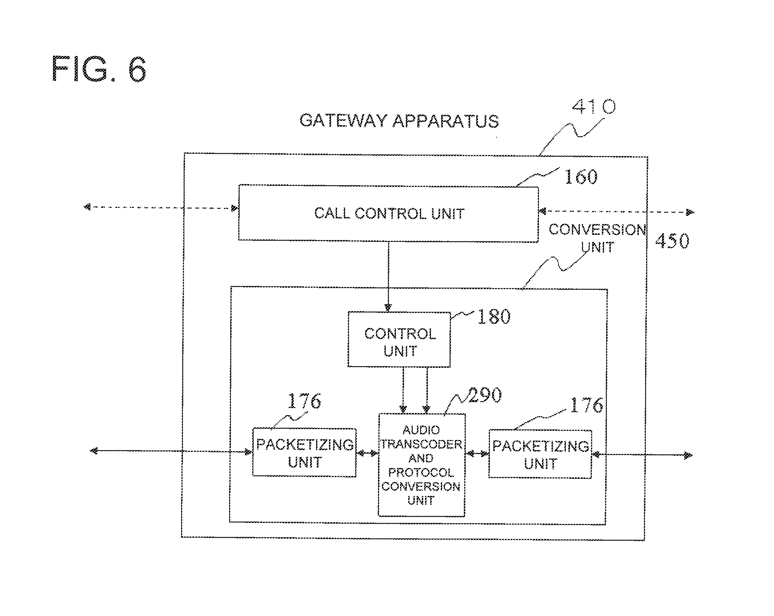

Fig. 6 is a diagram showing a configuration of the gateway apparatus 410. Referring to Fig. 6, same reference numerals are assigned to elements that are the same as those in Fig. 3. Descriptions of the elements in Fig. 6 that perform the same operations as those in Fig. 3 will be therefore omitted.

Referring to the configuration in Fig. 6, protocols of the networks on both sides of the gateway apparatus 410 are the RTP. Accordingly, it is not necessary to perform protocol conversion. In case an audio compression-encoding scheme is different between the portable terminal 125 and the portable terminal 155 (for example, the audio compression-encoding schemes of the portable terminal 125 and the portable terminal 155 are AMR and G. 711, respectively), an audio transcoder and protocol conversion unit 290 converts the RTP payload format for the AMR codec and an RTP header for the G. 711 codec, in addition to conversion of the audio compression-encoding scheme, based on conversion information (on the conversion of the audio compression-encoding scheme and/or the protocol conversion) from the control unit 180.

In this exemplary embodiment, a different known codec other than the AMR codec and the G. 711 codec mentioned above may be used as an audio codec used for generation of the compression encoded bit stream of a voice.

Though the control unit 180 is arranged in a conversion unit 450, the control unit 180 may be arranged in the call control unit 160.

Further, the call control unit 160 and the conversion unit 450 can be arranged, being individually separated at different apparatuses. In the case of such a configuration, a control signa! may be exchanged between the call control unit 160 and the conversion unit 450 using the ITU-T H. 248 MEGACO protocol, for example. Referring to Fig. 6, processing and functions of the call control unit 160 and the conversion unit 450 (formed of the control unit 180, the packetizing units 176, and the audio transcoder and protocol conversion unit 290) may also be implemented by a program executed by a computer constituting the gateway apparatus 410.

According to the respective exemplary embodiments described above, the following effects are achieved.

The gateway apparatus of the present invention allows interconnection between a portable terminal connected to the mobile circuit switched network and a VoIP terminal connected to the mobile high-speed network, and may achieve interconnection of voice communication between any combination of terminals without alteration of the portable terminal.

Further, even if the compression-encoding scheme of a voice is different between the portable terminals, the gateway apparatus converts the compression-encoding scheme of the voice. Interconnection of voice communication can be thereby achieved without altering the portable terminal.

Furthermore, even if at least one of the mobile high-speed network and the mobile circuit switched network is connected to the IMS network, the gateway apparatus of the present invention allows interconnection between the mobile circuit switched network and the IMS network via the IMS network. Interconnection of voice communication between the terminals can be achieved. In this case, the terminal on the side of the IMS network can enjoy various IMS services as well as the voice communication.

Disclosures of Patent Documents listed above are incorporated herein by reference. Modifications and adjustments of the exemplary embodiment and the examples are possible within the scope of the overall disclosure (including claims) of the present invention, and based on the basic technical concept of the invention. Various combinations and selections of various disclosed elements are possible within the scope of the claims of the present invention. That is, the present invention of course includes various variations and modifications that could be made by those skilled in the art according to the overall disclosure including the claims and the technical concept.

### EXPLANATIONS OF SYMBOLS

- 110, 410: gateway apparatus
- 120, 125, 150, 155: portable terminal
- 130, 135: mobile circuit switched network
- 140: mobile high-speed network
- 160: call control unit
- 170, 250, 450: conversion unit
- 172: control and analysis unit
- 175, 200: protocol conversion unit
- 176: packetizing unit
- 180: control unit
- 190: audio transcoder
- 290: audio transcoder and protocol conversion unit
- 350, 360: IMS network

## Claims

1. A gateway apparatus that performs voice communication mutually between a mobile high-speed network and a mobile circuit switched network via an IMS network, **characterized in that** said gateway apparatus comprises:
means that receives a packet from said mobile high-speed network or from said IMS network, performs protocol conversion of said packet, in case said means decides that said protocol conversion of said packet is necessary, converts an audio compression-encoding scheme, in case said means decides that said conversion of said audio compression-encoding scheme is necessary, and outputs the converted packet to said IMS network or to said mobile circuit switched network, and
means that receives a circuit switching protocol from said mobile circuit switched network or a packet from said IMS network to perform protocol conversion, converts an audio compression-encoding scheme, in case said means decides that said conversion of said audio compression-encoding scheme is necessary, converts resulting information into a packet, and outputs said packet converted to said IMS network or to said mobile high-speed network.

2. The gateway apparatus according to claim 1, wherein said gateway apparatus is arranged between said mobile circuit switched network and said IMS network, and
said mobile high-speed network is connected to said gateway apparatus via said IMS network.

3. The gateway apparatus according to claim 1, wherein said IMS networks are arranged on both sides of said gateway apparatus,
said mobile circuit switched network is connected to said gateway apparatus via said IMS network on one of said both sides, and
said mobile high-speed network is connected to said gateway apparatus via said IMS network on said other of said both sides.

4. The gateway apparatus according to claim 1 or 2, wherein said gateway apparatus comprises
a call control unit and a conversion unit, wherein
said conversion unit includes:
a control unit;
a protocol conversion unit;,
an audio transcoder; and
a packetizing unit, wherein
said call control unit supplies, to said control and analysis unit of said conversion unit, preset information on a call control signal received from said mobile circuit switched network and preset information on a call control signal received from said mobile high-speed network or said IMS network, for each channel,
said control unit compares said information for each channel received from said call control unit, decides whether or not said protocol conversion or said conversion of said audio encoding scheme is necessary, and outputs to said protocol conversion unit and to said audio transcoder information instructing said conversion for each channel, in case said control unit decides that said conversion is necessary,
said protocol conversion unit receives from said control unit said information instructing conversion for each channel, performs said protocol conversion, in case said protocol conversion is necessary,
said audio transcoder converts said audio encoding scheme, based on said information instructing conversion from said control unit, and
said packetizing unit receives payload format information from said protocol conversion unit, packetizes data into a packet and outputs said packet to said mobile high-speed network or to said IMS network.

5. The gateway apparatus according to claim 3, wherein said gateway apparatus comprises
a call control unit and a conversion unit, wherein;
said conversion unit includes:
a control unit;
an audio transcoder and protocol conversion unit; and
a packetizing unit, wherein
in case said audio encoding scheme is different between terminals, said audio transcoder and protocol conversion unit coverts a packet payload format and packet header information, in addition to said conversion of said audio compression-encoding scheme, according to a conversion instruction from said conversion unit,
said packetizing unit packetizes resulting information from said audio transcoder and protocol conversion unit into a packet and outputs said packet to said IMS network.

6. The gateway apparatus according to any one of claims 1 to 5, wherein said mobile high-speed network is a network including at least one of LTE (Long Term Evolution), EPC (Evolved Packet Core), UMA (Ultra Mobile Access), HSDPA (High Speed Downlink Packet Access), HSPA (High Speed Packet Access), and WiMax.

7. A method for a gateway to perform voice communication mutually between a mobile high-speed network and a mobile circuit switched network via an IMS network, **characterized in that** said method comprises:
receiving a packet from said mobile high-speed network or from said IMS network;
performing protocol conversion of said packet, in case said gateway decides that said protocol conversion of said packet is necessary;
converting an audio compression-encoding scheme, in case said gateway decides that said conversion of said audio compression-encoding scheme is necessary; and
outputting a resulting packet to said IMS network or to said mobile circuit switched network, and that said method further comprises:
receiving a circuit switching protocol from said mobile circuit switched network or a packet from said IMS network to perform protocol conversion;
converting an audio compression-encoding scheme, in case said gateway decides that said conversion of said audio compression-encoding scheme is necessary; and
converting resulting information into a packet; and
outputting said packet converted to said IMS network or to said mobile high-speed network.

8. The method for a gateway according to claim 7, wherein said mobile high-speed network is a network including at least one of LTE (Long Term Evolution), EPC (Evolved Packet Core), UMA (Ultra Mobile Access), HSDPA (High Speed Downlink Packet Access), HSPA (High Speed Packet Access), and WiMax.

9. A program for a computer constituting a gateway apparatus that performs voice communication mutually between a mobile high-speed network and a mobile circuit switched network via an IMS network, **characterized in that** said program causes said computer to execute processing including:
receiving a packet from said mobile high-speed network or from said IMS network, performing protocol conversion of said packet, in case said gateway apparatus decides that said protocol conversion of said packet is necessary, converting an audio compression-encoding scheme, in case said gateway apparatus decides that said conversion of said audio compression-encoding scheme is necessary, and outputting a resulting packet to said IMS network or to said mobile circuit switched network; and
receiving a circuit switching protocol from said mobile circuit switched network or a packet from said IMS network to perform protocol conversion, converting an audio compression-encoding scheme, in case said gateway apparatus decides that said conversion of said audio compression-encoding scheme is necessary, converting resulting information into a packet, and outputting said packet converted to said IMS network or said mobile high-speed network.

10. The program according to claim 9, wherein said mobile high-speed network is a network including at least one of LTE (Long Term Evolution), EPC (Evolved Packet Core), UMA (Ultra Mobile Access), HSDPA (High Speed Downlink Packet Access), HSPA (High Speed Packet Access), and WiMax.
